# EUROPÄISCHE PATENTSCHRIFT

(11) **EP 3 895 193 B1**
(45) Veröffentlichungstag und Bekanntmachung des Hinweises auf die Patenterteilung: **11.01.2023**
(21) Anmeldenummer: 19805237.5
(22) Anmeldetag: 14.11.2019
(51) Int. Cl.: H01H 9/00, H01H 3/42

(54) **GETRIEBE FÜR EINEN LASTSTUFENSCHALTER**
TRANSMISSION FOR AN ON-LOAD TAP CHANGER
MÉCANISME DE TRANSMISSION POUR UN CHANGEUR DE PRISES EN CHARGE

(30) Priorität: 13.12.2018 DE 102018132027
(43) Veröffentlichungstag der Anmeldung: 20.10.2021
(73) Patentinhaber: Maschinenfabrik Reinhausen GmbH, 93059 Regensburg (DE)
(72) Erfinder: HEROLD, Stefan, 81925 München (DE)
(86) Internationale Anmeldenummer: PCT/EP2019/081287
(87) Internationale Veröffentlichungsnummer: WO 2020/120062

(56) Entgegenhaltungen:
- WO-A1-2016/146387
- DE-B3-102005 027 527
- DE-B3-102014 107 722

## Beschreibung

Die Erfindung betrifft ein Getriebe für einen Laststufenschalter, der einen Motor mit einer Abtriebswelle und einen Lastumschalter mit einer Antriebswelle aufweist, sowie einen entsprechenden Laststufenschalter mit dem Getriebe.

Laststufenschalter werden zur unterbrechungslosen Umschaltung zwischen Wicklungsanzapfungen eines Transformators eingesetzt. Bekannte Laststufenschalter bestehen üblicherweise aus einem Wähler zur leistungslosen Anwahl der jeweiligen Wicklungsanzapfung des Transformators, auf die umgeschaltet werden soll, und einem Lastumschalter zur eigentlichen Umschaltung von der bisherigen auf die neue, angewählte Wicklungsanzapfung. Ein Energiespeicher, oft auch als Kraftspeicher bezeichnet, dient dabei üblicherweise zur Umwandlung einer kontinuierlichen, langsamen Drehbewegung der Abtriebswelle, die von einem Motor mit konstanter Drehzahl angetrieben wird, in eine sprungartige, schnelle Drehbewegung der Antriebswelle, die den Lastumschalter antreibt. Es sind bereits zahlreiche Energiespeicher bekannt, die die sprungartige Drehbewegung der Antriebswelle mithilfe einer Speicherfeder ermöglichen. Das Prinzip dabei ist immer das Gleiche: die von dem Motor mit konstanter Drehzahl angetriebene Abtriebswelle spannt die Speicherfeder bis zu einem Maximalpunkt, und nach Überschreiten dieses Maximalpunktes entspannt sich die Speicherfeder schlagartig und treibt dadurch die Antriebswelle sprungartig an. Weiterhin weisen bekannte Energiespeicher in der Regel Kupplungen auf, über welche die Wählerbewegung von der Lastumschalterbetätigung entkoppelt wird. Diese Kupplungen, auch Freiläufe genannt, ebenso wie die Speicherfeder bewirken, dass der Umschaltvorgang, wenn er einmal gestartet wurde, in einem Fehlerfall nicht mehr abgebrochen, das heißt der Laststufenschalter nicht mehr zurück in seine Ausgangsposition gefahren werden kann.

Der Aufbau eines bekannten Energiespeichers mit Feder ist äußerst komplex, da er aus vielen Einzelkomponenten besteht, die in korrekter Weise zusammenwirken müssen. Das macht die bekannten Energiespeicher kostspielig und fehleranfällig. Ein Laststufenschalter aus dem Stand der Technik wird in der WO-A-2016/146387 offenbart.

Daher ist es Aufgabe der Erfindung, ein verbessertes Konzept für ein Getriebe in einem Laststufenschalter zu schaffen, das kostengünstig ist, eine einfachere Betätigung des Laststufenschalters und eine erhöhte Sicherheit im Betrieb ermöglicht.

Diese Aufgabe wird durch den Gegenstand des Anspruchs 1 gelöst. Weitere Ausführungsformen sind in den abhängigen Ansprüchen beschrieben.

Gemäß dem verbesserten Konzept wird ein Getriebe für einen Laststufenschalter angegeben, wobei der Stufenschalter einen Motor mit einer Abtriebswelle und einen Lastumschalter mit einer Antriebswelle aufweist, und das Getriebe eine Kurvenscheibe, ein Antriebszahnrad und eine mit dem Antriebszahnrad gekoppelte Rolle umfasst. Dabei ist die Kurvenscheibe mit der Abtriebswelle drehfest verbindbar und das Antriebszahnrad ist mit der Antriebswelle drehfest verbindbar.

Die Abtriebswelle liegt auf einer Rotationsachse der Kurvenscheibe. Die Kurvenscheibe weist eine innere Kontur und eine äußere Kontur auf, die von der Rolle abgefahren werden können. Die innere und die äußere Kontur weisen jeweils einen ersten Bereich mit einem konstanten Krümmungsradius, bezogen auf die Rotationsachse, und einen zweiten Bereich auf, in dem sich der Abstand der jeweiligen Kontur zu der Rotationsachse der Kurvenscheibe verändert, beispielsweise verkleinert oder vergrößert. Dabei fährt die Rolle bei einer Rotationsbewegung der Kurvenscheibe die Konturen derart ab, dass sie einen Teil des ersten Bereichs der äußeren Kontur, unmittelbar danach einen Teil des zweiten Bereichs der äußeren Kontur und unmittelbar danach, unabhängig von einem möglichen Richtungswechsel der Rotationsbewegung der Kurvenscheibe, einen Teil des ersten Bereichs der inneren Kontur abfährt.

Durch die Ausgestaltung und insbesondere die Bereiche der Konturen der Kurvenscheibe wird bewirkt, dass während einem Schaltvorgang des Laststufenschalters zunächst der Wähler mit konstanter Drehzahl bewegt und anschließend der Lastumschalter schneller, insbesondere sprungartig betätigt wird, ohne dass dabei Freiläufe zur Entkoppelung und eine Speicherfeder zur Betätigung des Lastumschalters erforderlich sind. Dies hat den Vorteil, dass eine Richtungsumkehr während dem Schaltvorgang in der Regel möglich ist. Eine Richtungsumkehr beziehungsweise ein Abbruch des Schaltvorganges einhergehend mit einem Zurückfahren des Wählers oder Lastumschalters in die Ausgangsposition kann beispielsweise dann notwendig sein, wenn durch eine Überwachungseinrichtung ein Fehler am Laststufenschalter detektiert wird, der besagt, dass dieser nicht ordnungsgemäß funktioniert, beispielsweise ein erhöhtes Drehmoment an der Antriebs- und/oder Abtriebswelle oder sonstige, durch Sensorik im Laststufenschalter erfasst Fehler. Abhängig vom jeweiligen Fehlerfall kann es dann sicherer sein, den Schaltvorgang abzubrechen.

Zudem vorteilhaft an dem Getriebe nach dem verbesserten Konzept ist, dass es weniger Bauteile aufweist und somit einfacherer und sichererer betrieben werden kann.

Gemäß zumindest einer Ausführungsform fährt die Rolle bei einer Rotationsbewegung der Kurvenscheibe die Konturen derart ab, dass sie einen Teil des ersten Bereichs der inneren Kontur, unmittelbar danach einen Teil des zweiten Bereichs der inneren Kontur und unmittelbar danach, unabhängig von einem möglichen Richtungswechsel der Rotationsbewegung der Kurvenscheibe, einen Teil des ersten Bereichs der äußeren Kontur abfährt.

Gemäß zumindest einer Ausführungsform ist zwischen dem zweiten Bereich der inneren Kontur und dem zweiten Bereich der äußeren Kontur der Teil des ersten Bereichs der inneren und/oder der Teil des ersten Bereichs der äußeren Kontur angeordnet.

Gemäß zumindest einer Ausführungsform muss die Rolle, wenn sie von dem zweiten Bereich der inneren Kontur in den zweiten Bereich der äußeren Kontur fährt, und umgekehrt, entweder über einen Teil des ersten Bereichs der inneren oder über einen Teil des ersten Bereichs der äußeren Kontur fahren.

Gemäß zumindest einer Ausführungsform liegt der zweite Bereich der inneren Kontur dem zweiten Bereich der äußeren Kontur gegenüber.

Gemäß zumindest einer Ausführungsform ist das Getriebe derart ausgebildet, dass für einen Schaltvorgang des Lastumschalters das Antriebszahnrad betätigt wird.

Gemäß zumindest einer Ausführungsform wird das Antriebszahnrad nicht bewegt, während die Rolle den Teil des ersten Bereichs einer der Konturen abfährt. Insbesondere wird der Wähler mit konstanter Geschwindigkeit bewegt, während die Rolle den Teil des ersten Bereichs einer der Konturen abfährt und insbesondere wird der Lastumschalter während der Wählerbewegung nicht bewegt.

Gemäß zumindest einer Ausführungsform wird das Antriebszahnrad bewegt, während die Rolle den Teil des zweiten Bereichs einer der Konturen abfährt. Insbesondere wird der Lastumschalter schnell und sprungartig bewegt, während die Rolle den Teil des zweiten Bereichs einer der Konturen abfährt und insbesondere wird der Wähler während der Lastumschalterbewegung nicht bewegt.

Gemäß zumindest einer Ausführungsform ist die Rolle an einem verzahnten Element, vorzugsweise einem Zahnradsegment, angeordnet, das mit dem Antriebszahnrad in Wirkverbindung steht.

Gemäß zumindest einer Ausführungsform umfasst das Getriebe einen Sperrmechanismus, der derart ausgebildet ist, dass er nach der Betätigung des Antriebszahnrades verhindert, dass das Antriebszahnrad weiterbewegt wird.

Gemäß zumindest einer Ausführungsform ist der Sperrmechanismus derart ausgebildet, dass er nach einem Schaltvorgang des Laststufenschalters verhindert, dass die an das Antriebszahnrad gekoppelte Schalteinheit des Lastumschalters weiterbewegt wird.

Durch den Sperrmechanismus wird sichergestellt, dass der Laststufenschalter nach einem Umschaltvorgang die neue Position und die Spannungsabstände zwischen den Kontakten im fortlaufenden Betrieb einhält, was auf lange Sicht zu einer längeren Lebenszeit der Schalteinheit und somit des gesamten Laststufenschalters beiträgt.

Gemäß zumindest einer Ausführungsform umfasst das Getriebe einen Lösemechanismus, der derart ausgebildet ist, dass er vor der Betätigung des Antriebszahnrades den Sperrmechanismus löst, sodass das Antriebszahnrad bewegt werden kann.

Gemäß zumindest einer Ausführungsform ist der Lösemechanismus derart ausgebildet, dass bei einem Schaltvorgang des Laststufenschalters die Schalteinheit des Lastumschalters betätigt werden kann.

Gemäß zumindest einer Ausführungsform weist die Kurvenscheibe eine dritte Kontur auf, in der mindestens ein Abtaster läuft. Die dritte Kontur weist einen ersten Bereich mit einem konstanten Krümmungsradius bezogen auf die Rotationsachse und einen zweiten Bereich auf, in dem sich der Abstand zu der Rotationsachse der Kurvenschiebe verändert, beispielsweise vergrößert und/oder verkleinert. Der mindestens eine Abtaster kann den ersten Bereich und den zweiten Bereich der dritten Kontur abfahren.

Gemäß zumindest einer Ausführungsform wirkt der mindestens eine Abtaster mit dem Sperr- und/oder Lösemechanismus derart zusammen, dass der Sperrmechanismus gelöst ist, während der mindestens eine Abtaster einen Teil des ersten Bereichs der dritten Kurve abfährt, und der Sperrmechanismus aktiviert wird, während der mindestens eine Abtaster den zweiten Bereich der dritten Kurve abfährt.

Beispielsweise kann der Sperrmechanismus zu einem beliebigen Zeitpunkt gelöst werden, zu dem sich der mindestens eine Abtaster im ersten Bereich befindet.

Beispielsweise kann der Sperrmechanismus zu einem beliebigen Zeitpunkt, zu dem sich der mindestens eine Abtaster im zweiten Bereich befindet, aktiviert werden.

Beispielsweise kann der Sperrmechanismus zu einem beliebigen Zeitpunkt, zu dem sich der mindestens eine Abtaster im zweiten Bereich befindet, gelöst werden.

Gemäß zumindest einer Ausführungsform umfasst der Sperr- und/oder Lösemechanismus mindestens eine Klinke, die mit dem mindestens einen Abtaster verbunden ist, und mindestens einen Vorsprung, der an dem Antriebszahnrad angeordnet ist.

Gemäß zumindest einer Ausführungsform wird der Sperrmechanismus aktiviert, indem die mindestens eine Klinke in den mindestens einen Vorsprung einrastet.

Gemäß zumindest einer Ausführungsform wird der Sperrmechanismus gelöst, indem die mindestens eine Klinke von dem mindestens einen Vorsprung gelöst wird.

Gemäß zumindest einer Ausführungsform umfasst das Getriebe eine Überwachungsvorrichtung zur Bestimmung einer Position, insbesondere einer absoluten Position, der Antriebswelle, der Abtriebswelle oder einer weiteren, damit gekoppelten Welle. Die Überwachungsvorrichtung kann beispielsweise einen Stellungsgeber, insbesondere einen Absolutwertgeber umfassen.

Mittels der Überwachungsvorrichtung beziehungsweise einer damit bestimmten Wellenposition kann bei Auftreten einer Störung, insbesondere während der Betätigung des Lastumschalters, anhand der Position entschieden werden, ob der Schaltvorgang zu Ende geführt, oder der Laststufenschalter zum Stillstand und/oder in seine Ausgangsposition zurückgefahren werden soll.

Gemäß dem verbesserten Konzept wird außerdem ein Laststufenschalter angegeben, der einen Motor mit einer Abtriebswelle, einen Lastumschalter mit einer Antriebswelle und ein Getriebe gemäß dem verbesserten Konzept umfasst.

Die Erläuterungen zu dem Getriebe gemäß dem verbesserten Konzept, insbesondere zu den einzelnen Merkmalen, gelten entsprechend analog für den Laststufenschalter gemäß dem verbesserten Konzept und umgekehrt.

Im Folgenden wird die Erfindung anhand beispielhafter Ausführungsformen unter Bezug auf die Zeichnungen im Detail erklärt. Komponenten, die funktionell identisch sind oder einen identischen Effekt haben, können mit identischen Bezugszeichen versehen sein. Identische Komponenten oder Komponenten mit identischer Funktion sind unter Umständen nur bezüglich der Figur erklärt, in der sie zuerst erscheinen. Die Erklärung wird nicht notwendigerweise in den darauffolgenden Figuren wiederholt.

Die Zeichnungen zeigen in
- FIG. 1: einen schematischen Aufbau einer beispielhaften Ausführungsform eines Laststufenschalters mit einem Getriebe nach dem verbesserten Konzept;
- FIG. 2: eine beispielhafte Ausführungsform eines Getriebes gemäß dem verbesserten Konzept;
- FIG. 3: eine weitere Ansicht der beispielhaften Ausführungsform aus FIG. 2;
- FIG. 4: eine beispielhafte Ausführungsform einer Kurvenscheibe eines Getriebes gemäß dem verbesserten Konzept.

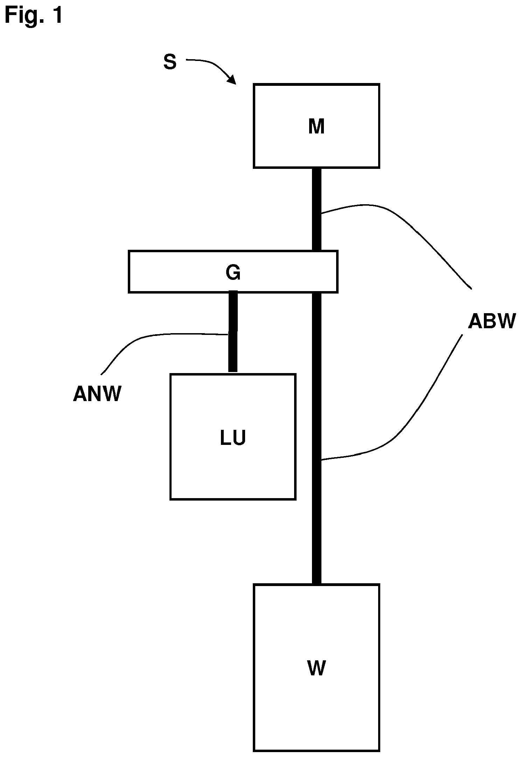

In FIG. 1 ist eine beispielhafte Ausführungsform eines Laststufenschalters S schematisch dargestellt, der beispielhaft einen Motor M mit einer Abtriebswelle ABW, einen Lastumschalter LU mit einer Antriebswelle ANW, einen Wähler W und ein Getriebe G umfasst. Der Lastumschalter LU und der Wähler W sind auf bekannte Art und Weise ausgebildet und daher nicht näher dargestellt. Der Wähler W umfasst mehrere Festkontakte (nicht dargestellt) und zwei bewegliche Kontakte (nicht dargestellt) und ist zum Antrieb der beweglichen Kontakte an die Abtriebswelle ABW gekoppelt. Der Lastumschalter LU umfasst eine bewegliche Kontakteinheit zur Lastumschaltung (nicht dargestellt) und ist zum Antrieb der Kontakteinheit an die Antriebswelle ANW gekoppelt. Die Antriebswelle ANW ist über das Getriebe G an die Abtriebswelle ABW gekoppelt, die der Motor M bei einem Schaltvorgang des Laststufenschalters S antreibt, beispielsweise mit konstanter Drehzahl.

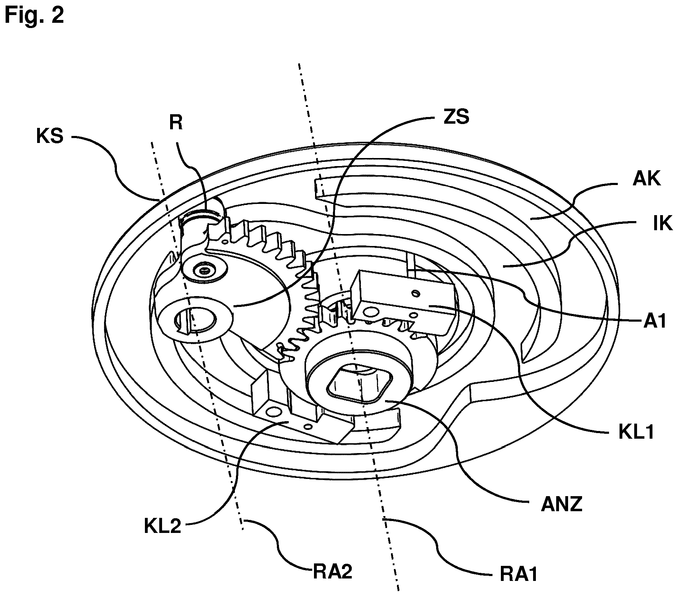

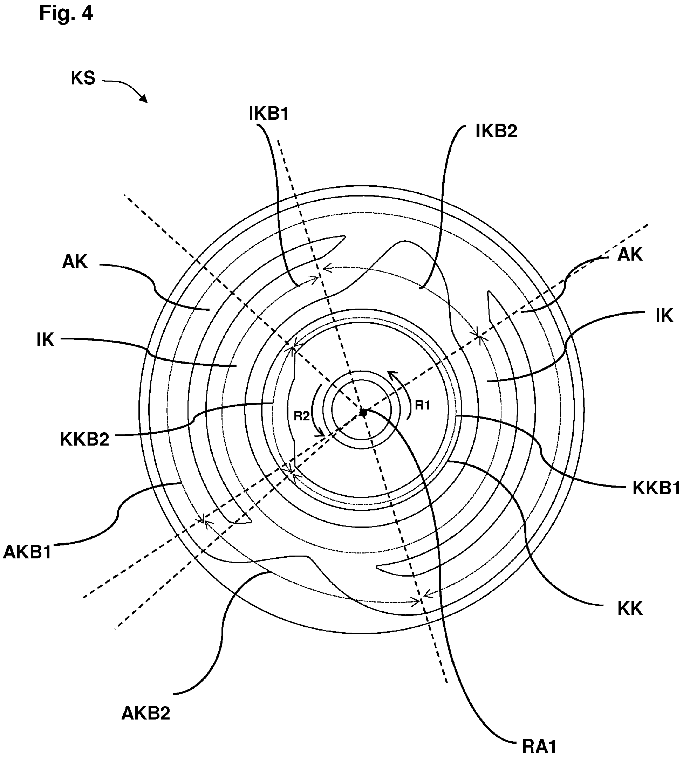

In FIG. 2 ist eine beispielhafte Ausführungsform eines Getriebes G gemäß dem verbesserten Konzept dargestellt. Das Getriebe G umfasst eine Kurvenscheibe KS, ein Antriebszahnrad ANZ und eine mit dem Antriebszahnrad ANZ gekoppelte Rolle R. Die Kurvenscheibe KS ist mit der Abtriebswelle ABW drehfest verbindbar und wird durch den Motor M über die Abtriebswelle ABW angetrieben. Dabei rotiert die Kurvenscheibe KS um eine Rotationsachse RA1, auf der die Abtriebswelle ABW liegt. Das Antriebszahnrad ANZ ist drehfest mit der Antriebswelle ANW verbindbar, und treibt somit die Kontakteinheit (nicht dargestellt) des Lastumschalters LU an. Die Rolle R ist an einem Zahnradsegment ZS angebracht, welches mit dem Antriebszahnrad ANZ in Wirkverbindung steht und pro Schaltvorgang des Lastumschalters LU abwechselnd von einer Drehrichtung in die andere um eine Achse RA2 bewegt wird. Die Kurvenscheibe KS weist eine innere Kontur IK und eine äußere Kontur AK auf, die jeweils verschiedene Bereiche umfassen, die in Fig. 4 mittels gestrichelter Linien dargestellt sind. Es sind jedoch auch andere Definitionen für die Bereiche denkbar, solange dabei die Funktion der einzelnen Bereiche, die im Folgenden erläutert wird, erfüllt bleibt. Beide Konturen IK und AK weisen jeweils einen ersten Bereich IKB1 und AKB1 auf, in dem der Krümmungsradius der Konturen bezogen auf die Rotationsachse RA1 konstant ist, und jeweils einen zweiten Bereich IKB2 und AKB2, in dem sich der Abstand der Konturen IK und AK zu der Rotationsachse RA1 verändert. Beispielsweise wird im zweiten Bereich der inneren Kontur IKB2 der Abstand erst größer und dann wieder kleiner und im zweiten Bereich der äußeren Kontur AKBZ erst kleiner und dann wieder größer. Ferner weist die Kurvenscheibe KS eine dritte Kontur KK auf, die ebenfalls einen ersten Bereich KKB1 und einen zweiten Bereich KKB2 umfasst, wobei der erste Bereich KKB1 einen auf die Rotationsachse RA1 bezogenen, konstanten Krümmungsradius hat und sich im zweiten Bereich KKB2 der Abstand der Kontur zur Rotationsachse RA1 verändert, beispielsweise zunächst verringert, dann vergrößert und danach wieder verringert, wie in Fig. 4 gezeigt.

Das Wirkprinzip des Getriebes G ist folgendermaßen: Bei einem Schaltvorgang des Stufenschalters S wird die Abtriebswelle ABW durch den Motor M beispielsweise mit konstanter Drehzahl betätigt und mit ihr die Kurvenscheibe KS in Rotation versetzt. Während der Rotation der Kurvenscheibe KS um die Rotationsachse RA1 fährt die Rolle R die Konturen ab. Beispielsweise fährt die Rolle R bei einer Drehung in einer Richtung R1 zunächst einen Teil des ersten Bereichs der äußeren Kontur AKB1, indem die Kontur einen konstanten Krümmungsradius aufweist, ab. Währenddessen fährt zumindest ein beweglicher Kontakt des Wählers W lastlos die neue, zu beschaltende Wicklungsanzapfung des Transformators an. Danach gelangt die Rolle R in den zweiten Bereich der äußeren Kontur AKB2, wobei die Wählerbewegung nun abgeschlossen ist. In diesem Bereich verringert sich zunächst der Abstand der äußeren Kontur AK zur Rotationsachse RA1 hin, sodass die Rolle R ebenfalls ihren Abstand zur Rotationsachse RA1 verringert. Dadurch rotiert das Zahnradsegment ZS im Vergleich zur vorherigen, langsamen Wählerbewegung, schneller, insbesondere sprungartig um die Achse RA2. Diese Bewegung wird über Verzahnungen direkt auf das Antriebszahnrad ANZ und damit auf die Antriebswelle ANW übertragen. Durch die Betätigung der Antriebswelle ANW wird schließlich auch die nicht dargestellte Kontakteinheit des Lastumschalters LU sprungartig betätigt. Damit wird durch die einzelnen Bereiche der Kontur, die die Rolle R abfährt, eine unabhängige Betätigung zunächst des Wählers W und anschließend des Lastumschalters LU umgesetzt.

Wird daraufhin ein neuer Schaltvorgang durch die Betätigung des Motors M initiiert, so fährt die Rolle R, unabhängig davon, ob die Kurvenscheibe KS in Richtung R1 oder R2 bewegt wird, bei der Wählerbewegung zunächst die innere Kontur IK ab, bevor sie in den zweiten Bereich der inneren Kontur IKB2 gelangt, in welchem wiederum die Betätigung des Lastumschalters LU erfolgt.

Bei einem wiederum erneuten Schaltvorgang fährt die Rolle R dann wieder die äußere Kontur AK ab.

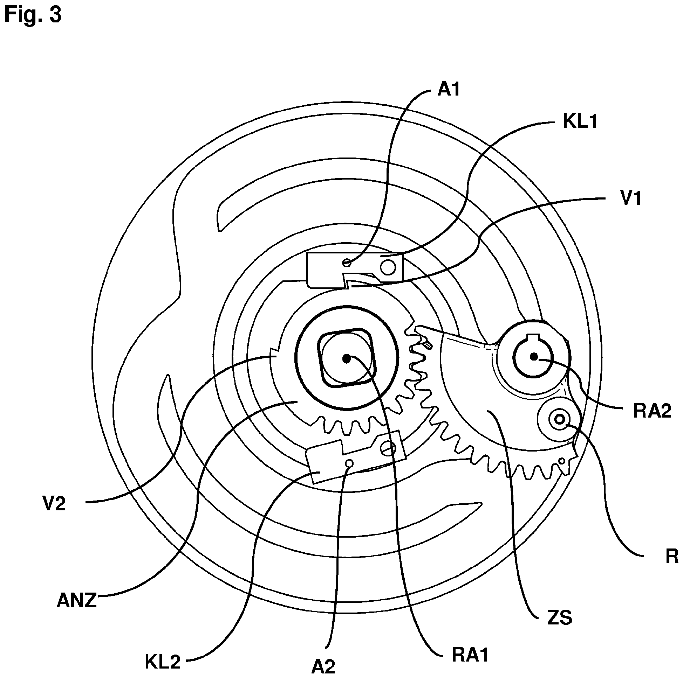

Weiterhin weist das Getriebe einen Sperr- bzw. Lösemechanismus auf, welcher in den Fig. 2 und 3 dargestellt ist. Dieser umfasst zwei Klinken KL1 und KL2 mit je einem Abtaster A1 und A2, der die dritte Kontur KK der Kurvenscheibe KS abfährt. Die Abtaster A1, A2 können beispielsweise stabförmig ausgebildet sein. Die zwei Klinken KL1 und KL2 wirken mit zwei Vorsprüngen V1 und V2 zusammen, die an dem Antriebszahnrad ANZ vorgesehen sind. Befindet sich eine der Klinken KL1 oder KL2 beispielsweise an einem der Vorsprünge V1 oder V2, also in einem eingerasteten Zustand, so kann das Antriebszahnrad ANZ nicht bewegt werden und der Sperrmechanismus ist aktiv.

Die Wirkungsweise des Sperr- bzw. Lösemechanismus' ist wie folgt: Zu Beginn eines Schaltvorganges, bei dem die Kurvenscheibe KS beispielsweise in Drehrichtung R1 bewegt wird, fährt der erste Abtaster A1 zunächst einen Teil des zweiten Bereichs der dritten Kontur KK ab. In diesem Bereich befindet sich die erste Klinke KL1 im eingerasteten Zustand an dem ersten Vorsprung V1. In diesem Zustand ist der Sperrmechanismus aktiv, sodass das Antriebszahnrad ANZ nicht bewegt werden kann. Bei weiterer Drehung der Kurvenscheibe KS gelangt der erste Abtaster A1 in den ersten Bereich der dritten Kontur KKB1. Dadurch wird die erste Klinke KL1 von dem ersten Vorsprung V1 gelöst und das Antriebszahnrad ANZ kann bewegt werden. Im weiteren Verlauf der Rotationsbewegung der Kurvenscheibe KS gelangt der zweite Abtaster A2 in den zweiten Bereich der dritten Kontur KKB2. Da sich hier der Abstand der Kontur zur Rotationsachse RA1 verändert, insbesondere verringert, wird der Abtaster A2 ebenfalls näher an die Rotationsachse RA1 gebracht und mit ihm die Klinke KL2, die daraufhin in den zweiten Vorsprung V2 einrastet. Dabei sind die Klinken KL1 und KL2 mit den zwei Abtastern A1 und A2, die Vorsprünge V1 und V2 sowie die Bereiche der dritten Kontur KKB1 und KKB2 derart angeordnet und ausgestaltet und wirken derart miteinander zusammen, dass vor einer Lastumschaltung beide Klinken gelöst sind oder gelöst werden, sodass das Antriebszahnrad ANZ bewegt werden kann, und dass unmittelbar nach einer Lastumschaltung eine der beiden Klinken an einem der beiden Vorsprünge einrastet, sodass sichergestellt ist, dass das Antriebszahnrad ANZ nach der Betätigung nicht weiterbewegt werden kann.

Durch das Getriebe nach dem verbesserten Konzept wird die genannte Aufgabe gelöst und insbesondere durch die Ausgestaltung der Konturen der Kurvenscheibe gewährleistet, dass jeweils im ersten Bereich der Konturen der Wähler bewegt und im zweiten Bereich der Konturen die Schalteinheit des Lastumschalters betätigt wird. Dadurch wird das Funktionsprinzip von bekannten Energiespeichern aus dem Stand der Technik, wonach die Betätigung des Lastumschalters schlagartig und entkoppelt im Nachgang zu der Wählerbewegung erfolgt, realisiert und dabei gleichzeitig der Nachteil, den die bekannten Energiespeicher aufweisen, nämlich, dass aufgrund von Freiläufen und der Feder im Fehlerfall keine Umkehr des Schaltvorganges mehr möglich ist, vermieden. Denn gemäß Getriebe nach dem verbesserten Konzept ist eine Richtungsumkehr beziehungsweise ein Abbruch des Schaltvorganges einhergehend mit einem Zurückfahren des Wählers oder Lastumschalters in die Ausgangsposition im Wesentlichen zu jedem Zeitpunkt des Schaltvorganges möglich.

### BEZUGSZEICHEN

- S: Stufenschalter
- M: Motor
- ABW: Abtriebswelle
- ANW: Antriebswelle
- G: Getriebe
- LU: Lastumschalter
- W: Wähler
- KS: Kurvenscheibe
- R: Rolle
- ANZ: Antriebszahnrad
- AK: Äußere Kontur
- IK: Innere Kontur
- KK: Dritte Kontur
- RA1, RA2: Rotationsachse
- ZS: verzahntes Element
- A1, A2: Abtaster
- KL1, KL2: Klinke
- V1, V2: Vorsprung
- AKB1: erster Bereich der äußeren Kontur
- AKB2: zweiter Bereich der äußeren Kontur
- IKB1: erster Bereich der inneren Kontur
- IKB2: zweiter Bereich der inneren Kontur
- KKB1: erster Bereich der dritten Kontur
- KKB2: zweiter Bereich der dritten Kontur

## Patentansprüche

1. Getriebe (G) für einen Laststufenschalter (S), der einen Motor (M) mit einer Abtriebswelle (ABW) und einen Lastumschalter (LU) mit einer Antriebswelle (ANW) aufweist, das Getriebe (G) umfassend
- eine Kurvenscheibe (KS), ein Antriebszahnrad (ANZ) und eine mit dem Antriebszahnrad gekoppelte Rolle (R),
wobei
- die Kurvenscheibe (KS) mit der Abtriebswelle (ABW) drehfest verbindbar ist und die Abtriebswelle auf einer Rotationsachse (RA1) der Kurvenscheibe (KS) liegt,
- das Antriebszahnrad (ANZ) mit der Antriebswelle (ANW) drehfest verbindbar ist **gekennzeichnet dadurch, dass**:
- die Kurvenscheibe (KS) eine innere Kontur (IK) und eine äußere Kontur (AK) aufweist, die von der Rolle (R) abgefahren werden können,
- die innere und die äußere Kontur (IK; AK) jeweils einen ersten Bereich (IKB1, AKB1) mit einem konstanten Krümmungsradius und einen zweiten Bereich (IKB2, AKB2) aufweisen, in dem sich der Abstand der jeweiligen Kontur zu der Rotationsachse (RA) der Kurvenscheibe (KS) verändert, und dass
- die Rolle (R) bei einer Rotationsbewegung der Kurvenscheibe (KS) die Konturen (IK; AK) derart abfährt, dass sie einen Teil des ersten Bereichs der äußeren Kontur (AKB1), danach einen Teil des zweiten Bereichs der äußeren Kontur (AKB2) und danach einen Teil des ersten Bereichs der inneren Kontur (IKB1) abfährt.

2. Getriebe nach Anspruch 1, wobei
- zwischen dem zweiten Bereich der inneren Kontur (IKB2) und dem zweiten Bereich der äußeren Kontur (AKB2) der Teil des ersten Bereichs der inneren (IKB1) und/oder der Teil des ersten Bereichs der äußeren Kontur (AKB1) angeordnet ist.

3. Getriebe nach einem der vorigen Ansprüche, wobei
- das Antriebszahnrad (ANZ) nicht bewegt wird, während die Rolle (R) den Teil des ersten Bereichs einer der Konturen (IKB1, AKB1) abfährt.

4. Getriebe nach einem der vorigen Ansprüche, wobei
- das Antriebszahnrad (ANZ) bewegt wird, während die Rolle (R) den Teil des zweiten Bereichs einer der Konturen (IKB2, AKB2) abfährt.

5. Getriebe nach einem der vorigen Ansprüche, wobei
- die Rolle (R) an einem verzahnten Element (ZS) angeordnet ist, das mit dem Antriebszahnrad (ANZ) in Wirkverbindung steht.

6. Getriebe nach einem der vorigen Ansprüche, wobei
- das Getriebe (G) derart ausgebildet ist, dass für einen Schaltvorgang des Lastumschalters (LU) das Antriebszahnrad (ANZ) betätigt wird.

7. Getriebe nach Anspruch 6, wobei
- das Getriebe (G) einen Sperrmechanismus umfasst, der derart ausgebildet ist, dass er nach der Betätigung des Antriebszahnrades (V) verhindert, dass das Antriebszahnrad weiterbewegt wird.

8. Getriebe nach Anspruch 7, wobei
- das Getriebe einen Lösemechanismus umfasst, der derart ausgebildet ist, dass er vor der Betätigung des Antriebszahnrades (ANZ) den Sperrmechanismus löst, sodass das Antriebszahnrad bewegt werden kann.

9. Getriebe nach Anspruch 8, wobei
- die Kurvenscheibe (KS) eine dritte Kontur (KK) aufweist, in der mindestens ein Abtaster (A) läuft,
- die dritte Kontur (KK) einen ersten Bereich (KKB1) mit einem konstanten Krümmungsradius und einen zweiten Bereich (KKB2) aufweist, in dem sich der Abstand zu der Rotationsachse (RA) der Kurvenscheibe (KS) verändert.

10. Getriebe nach Anspruch 9, wobei
- der mindestens eine Abtaster (A) mit dem Sperr- und/oder Lösemechanismus derart zusammenwirkt, dass der Sperrmechanismus gelöst ist, während der mindestens eine Abtaster (A) einen Teil des ersten Bereichs der dritten Kurve (KKB2) abfährt, und
- der Sperrmechanismus aktiviert wird, während der mindestens eine Abtaster (A) den zweiten Bereich der dritten Kurve (KKB1) abfährt.

11. Getriebe nach Anspruch 9 oder 10, wobei
- der Sperr- und/oder Lösemechanismus mindestens eine Klinke (KL), die mit dem mindestens einen Abtaster (A) verbunden ist, und mindestens Vorsprung (V), der an dem Antriebszahnrad (ANZ) angeordnet ist, umfasst.

12. Laststufenschalter, umfassend
- einen Motor (M) mit einer Abtriebswelle (ABW), einen Lastumschalter (LU) mit einer Antriebswelle (ANW) und ein Getriebe (G), das gemäß einem der vorigen Ansprüche ausgebildet ist.

## Claims

1. A transmission (G) for an on-load tap-changer (S) which has a motor (M) with an output shaft (ABW) and has a diverter switch (LU) with a drive shaft (ANW), the transmission (G) comprising
- a cam disk (KS), a drive gear wheel (ANZ) and a roller (R) which is coupled to the drive gear wheel,
wherein
- the cam disk (KS) is connectable in a rotationally fixed manner to the output shaft (ABW) and the output shaft lies on a rotation axis (RA1) of the cam disk (KS),
- the drive gear wheel (ANZ) is connectable in a rotationally fixed manner to the drive shaft (ANW), **characterized in that**:
- the cam disk (KS) has an inner contour (IK) and an outer contour (AK), which inner contour and outer contour can be followed by the roller (R),
- the inner and the outer contour (IK; AK) each have a first region (IKB1, AKB1) with a constant radius of curvature and a second region (IKB2, AKB2) in which the distance of the respective contour from the rotation axis (RA) of the cam disk (KS) changes, and **in that**
- the roller (R), in the event of a rotational movement of the cam disk (KS), follows the contours (IK; AK) in such a way that said roller follows a portion of the first region of the outer contour (AKB1), thereafter a portion of the second region of the outer contour (AKB2) and thereafter a portion of the first region of the inner contour (IKB1).

2. The transmission as claimed in claim 1, wherein
- the portion of the first region of the inner contour (IKB1) and/or the portion of the first region of the outer contour (AKB1) are/is arranged between the second region of the inner contour (IKB2) and the second region of the outer contour (AKB2).

3. The transmission as claimed in either of the preceding claims, wherein
- the drive gear wheel (ANZ) is not moved while the roller (R) is following the portion of the first region of one of the contours (IKB1, AKB1).

4. The transmission as claimed in one of the preceding claims, wherein
- the drive gear wheel (ANZ) is moved while the roller (R) is following the portion of the second region of one of the contours (IKB2, AKB2).

5. The transmission as claimed in one of the preceding claims, wherein
- the roller (R) is arranged on a toothed element (ZS) which is operatively connected to the drive gear wheel (ANZ).

6. The transmission as claimed in one of the preceding claims, wherein
- the transmission (G) is designed in such a way that the drive gear wheel (ANZ) is operated for a switching process of the diverter switch (LU).

7. The transmission as claimed in claim 6, wherein
- the transmission (G) comprises a locking mechanism which is designed in such a way that it, after operation of the drive gear wheel (V), prevents the drive gear wheel from being moved further.

8. The transmission as claimed in claim 7, wherein
- the transmission comprises a release mechanism which is designed in such a way that it, before operation of the drive gear wheel (ANZ), releases the locking mechanism, so that the drive gear wheel can be moved.

9. The transmission as claimed in claim 8, wherein
- the cam disk (KS) has a third contour (KK) in which at least one follower (A) runs,
- the third contour (KK) has a first region (KKB1) with a constant radius of curvature and a second region (KKB2) in which the distance from the rotation axis (RA) of the cam disk (KS) changes.

10. The transmission as claimed in claim 9, wherein
- the at least one follower (A) interacts with the locking and/or release mechanism in such a way that the locking mechanism is released while the at least one follower (A) is following a portion of the first region of the third curve (KKB2), and
- the locking mechanism is activated while the at least one follower (A) is following the second region of the third curve (KKB1).

11. The transmission as claimed in claim 9 or 10, wherein
- the locking and/or release mechanism comprises at least one locking pawl (KL), which is connected to the at least one follower (A), and comprises at least one projection (V) which is arranged on the drive gear wheel (ANZ).

12. An on-load tap-changer, comprising
- a motor (M) with an output shaft (ABW), a diverter switch (LU) with a drive shaft (ANW), and a transmission (G) which is designed as claimed in one of the preceding claims.

## Revendications

1. Transmission (G) pour un commutateur de coupure à gradins (S), qui comprend un moteur (M) avec un arbre entraîné (ABW) et un commutateur de coupure (LU) avec un arbre d'entraînement (ANW), la transmission (G) comprenant
- une came (KS), une roue dentée d'entraînement (ANZ) et un rouleau (R) couplé à la roue dentée d'entraînement,
- la came (KS) pouvant être reliée de manière solidaire en rotation à l'arbre entraîné (ABW) et l'arbre entraîné étant situé sur un axe de rotation (RA1) de la came (KS),
- la roue dentée d'entraînement (ANZ) pouvant être reliée de manière solidaire en rotation à l'arbre d'entraînement (ANW),
**caractérisée en ce que** :
- la came (KS) présente un contour intérieur (IK) et un contour extérieur (AK), qui peuvent être parcourus par le rouleau (R),
- le contour intérieur et le contour extérieur (IK ; AK) présentent respectivement une première zone (IKB1, AKB1) ayant un rayon de courbure constant et une deuxième zone (IKB2, AKB2) dans laquelle la distance du contour respectif par rapport à l'axe de rotation (RA) de la came (KS) varie, et **en ce que**
- le rouleau (R), lors d'un mouvement de rotation de la came (KS), parcourt les contours (IK ; AK) de telle sorte qu'il parcourt une partie de la première zone du contour extérieur (AKB1), puis une partie de la deuxième zone du contour extérieur (AKB2), puis une partie de la première zone du contour intérieur (IKB1).

2. Transmission selon la revendication 1, dans laquelle
- entre la deuxième zone du contour intérieur (IKB2) et la deuxième zone du contour extérieur (AKB2) est agencée la partie de la première zone du contour intérieur (IKB1) et/ou la partie de la première zone du contour extérieur (AKB1).

3. Transmission selon l'une quelconque des revendications précédentes, dans laquelle
- la roue dentée d'entraînement (ANZ) n'est pas déplacée pendant que le rouleau (R) parcourt la partie de la première zone de l'un des contours (IKB1, AKB1).

4. Transmission selon l'une quelconque des revendications précédentes, dans laquelle
- la roue dentée d'entraînement (ANZ) est déplacée pendant que le rouleau (R) parcourt la partie de la deuxième zone de l'un des contours (IKB2, AKB2).

5. Transmission selon l'une quelconque des revendications précédentes, dans laquelle
- le rouleau (R) est agencé sur un élément denté (ZS) qui est en liaison fonctionnelle avec la roue dentée d'entraînement (ANZ).

6. Transmission selon l'une quelconque des revendications précédentes, dans laquelle
- la transmission (G) est configurée de telle sorte que la roue dentée d'entraînement (ANZ) est actionnée pour une opération de commutation du commutateur de coupure (LU).

7. Transmission selon la revendication 6, dans laquelle
- la transmission (G) comprend un mécanisme de blocage qui est configuré pour empêcher la poursuite du mouvement de la roue dentée d'entraînement après l'actionnement de la roue dentée d'entraînement (V).

8. Transmission selon la revendication 7, dans laquelle
- la transmission comprend un mécanisme de relâchement qui est configuré pour relâcher le mécanisme de blocage avant l'actionnement de la roue dentée d'entraînement (ANZ), de telle sorte que la roue dentée d'entraînement peut être déplacée.

9. Transmission selon la revendication 8, dans laquelle
- la came (KS) présente un troisième contour (KK) dans lequel se déplace au moins un palpeur (A),
- le troisième contour (KK) présente une première zone (KKB1) ayant un rayon de courbure constant et une deuxième zone (KKB2) dans laquelle la distance par rapport à l'axe de rotation (RA) de la came (KS) varie.

10. Transmission selon la revendication 9, dans laquelle
- l'au moins un palpeur (A) coopère avec le mécanisme de blocage et/ou de relâchement de telle sorte que le mécanisme de blocage est relâché pendant que l'au moins un palpeur (A) parcourt une partie de la première zone de la troisième courbe (KKB2), et
- le mécanisme de blocage est activé pendant que l'au moins un palpeur (A) parcourt la deuxième zone de la troisième courbe (KKB1).

11. Transmission selon la revendication 9 ou 10, dans laquelle
- le mécanisme de blocage et/ou de relâchement comprend au moins un cliquet (KL) qui est relié à l'au moins un palpeur (A) et au moins une saillie (V) qui est agencée sur la roue dentée d'entraînement (ANZ).

12. Commutateur de coupure à gradins, comprenant
- un moteur (M) avec un arbre entraîné (ABW), un commutateur de coupure (LU) avec un arbre d'entraînement (ANW) et une transmission (G), qui est configurée selon l'une quelconque des revendications précédentes.
